# EUROPEAN PATENT APPLICATION

(11) **EP 4 371 880 A1**
(43) Date of publication of application: **22.05.2024**
(21) Application number: 22208365.1
(22) Date of filing: 18.11.2022
(51) Int. Cl.: B64D 11/04, B60L 53/12, B64D 11/00

(54) **TROLLEY/CART BATTERY CHARGING SYSTEM**

(71) Applicant: B/E Aerospace, Inc., Winston-Salem, NC 27105 (US)
(72) Inventor: PANJER, Frederik, Adrian, Stephan, UT 3953BW Maarsbergen (NL)
(74) Representative: Dehns

(57) **Abstract**

There is provided an aircraft trolley battery charging system comprising a trolley (100). The trolley includes a battery (102) and a receiver (104). The aircraft trolley battery charging system further comprises an aircraft surface (120), wherein the trolley (100) is configured to move on the aircraft surface (120) and at least one field generator (122a, 122b) provided at the aircraft surface (120).

## Description

### TECHNICAL FIELD

The examples presented herein relate to a trolley/cart battery charging system. In particular, the present disclosure relates to a trolley/cart battery charging system for use on an aircraft.

### BACKGROUND

Trollies and carts are used, in aircraft, to dispense meals, drinks, shopping items etc. to passengers at their seat during flight. In some instances, there is a requirement for power source within the trolley and cart, for example, for payment purposes, for cooling/warming drinks/meals and the like. As the cabin crew use the trolley during service, it is possible that a trolley/cart will run low on power source and, therefore, the trolley/cart needs to be returned to the galley to be charged. There is a need for improved charging of a power source on a trolley/cart for an aircraft.

### SUMMARY

In one aspect, there is provided an aircraft trolley battery charging system comprising a trolley, wherein the trolley includes a battery and a receiver. The aircraft trolley battery charging system further comprises an aircraft surface, wherein the trolley is configured to move on the aircraft surface, and at least one field generator provided at the aircraft surface.

The at least one field generator may be provided below the aircraft surface.

The aircraft surface may be a floor of an aircraft cabin.

The trolley may include an external surface and the receiver may extend from the external surface towards the aircraft surface. The receiver may be configured to extend to be as close as possible to the aircraft surface without contacting the aircraft surface.

In another aspect, there is provided an aircraft comprising an aircraft cabin and an aircraft trolley battery charging system as described above.

The aircraft cabin may include one of a business class cabin, a premium economy class cabin, at least one economy class cabin and at least one galley.

The at least one field generator may include at least one of a plurality of galley field generators, a plurality of business class field generators, a plurality of premium economy class field generators and a plurality of economy class field generators. The plurality of business class field generators may be separated by a distance of between 100cm to 210cm, the plurality of premium economy class field generators may be separated by a distance of between 70cm and 100cm, and the plurality of economy class field generators may be separated by a distance of between 70cm and 90cm.

In another aspect, there is provided a method of charging a battery in an aircraft trolley. The method includes providing a battery and a receiver in a trolley, providing at least one field generator at an aircraft surface, wherein the trolley is configured to move on the aircraft surface, and moving the receiver over the at least one field generator such that energy may be transferred, via induction, from the at least one field generator to the receiver.

The at least one field generator may be provided below the aircraft surface.

The aircraft surface may be a floor of an aircraft cabin.

The trolley may include an external surface and wherein the receiver may extend from the external surface towards the aircraft surface. The receiver may be configured to extend to be as close as possible to the aircraft surface without contacting the aircraft surface.

### BRIEF DESCRIPTION OF THE DRAWINGS

Figure 1 shows a system for charging a trolley/cart used in an aircraft.
Figure 2 shows an overview of an aircraft cabin.

### DETAILED DESCRIPTION

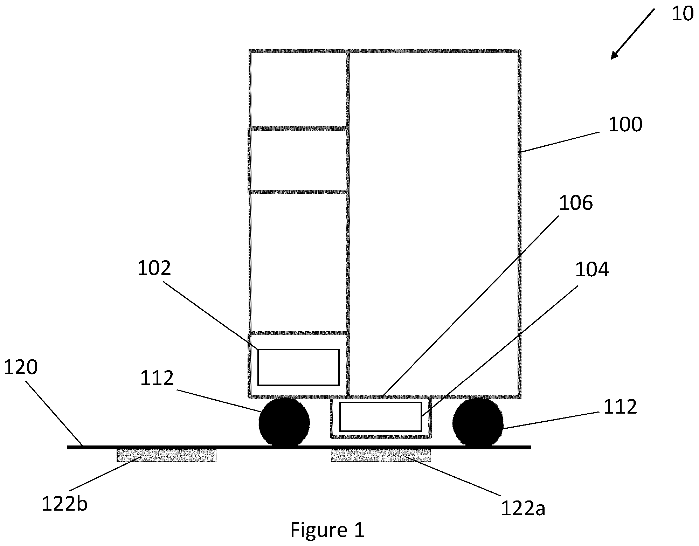

An overview of a system 10 for charging an aircraft trolley 100 (also known as a cart) is shown in Figure 1. The system 10 includes a trolley 100. The trolley 100 has wheels 112 to be able to manoeuvre the trolley over an aircraft surface 120. The aircraft surface 120 may include the floor of a passenger cabin, floor of a galley, or any other floor present in an aircraft cabin.

The trolley 100 includes a battery 102 located within the interior of the trolley 100. The battery 102 provides power to various points in the trolley 100. For example, the battery 102 could provide power to cooling/warming plates (not shown), payment stations (not shown), dispensing stations (not shown), charging stations for tablets/phones of cabin crew (not shown), and any other use where power is required.

The trolley 100 also includes an external surface 106. As shown in Figure 1, the external surface 106 is located at the bottom of the trolley 100. A receiver 104 extends from the external surface 106 towards the aircraft surface 120. As shown in Figure 1, the receiver 104 may be located between the wheels 112. It is envisaged that the receiver 104 will extend to be as close as possible to the aircraft surface 120 without actually contacting the aircraft surface 120. The receiver 104 is configured to receive energy wirelessly from the aircraft surface 120, as described in more detail below.

As shown in Figure 1, the aircraft surface 120 may include a first field generator 122a and a second field generator 122b. It is envisaged that the first field generator 122a and the second field generator 122b are located beneath the aircraft surface 120 such that the trolley 100 can be moved freely over the aircraft surface 120 without obstruction. Although there are only shown two field generators in Figure 1, it is envisaged that more than two field generators would be provided at the aircraft surface 120 throughout the passenger cabin. For example, in an aircraft where there is an aisle between rows of seats, the field generators may be located at the aircraft surface along the aisle and between the rows of seats. The field generators may also be provided at an aircraft surface located in a galley of an aircraft (e.g. under the galley floor). The field generators may be separated by a distance along the aircraft surface - for example, the distance may be between 50cm and 220cm, or within 70cm and 200cm.

The trolley 100 of Figure 1 is shown positioned above the first field generator 122a. In this way, the first field generator 122a provides energy, via induction, to the receiver 104 on the trolley 100. The receiver 104 then provides the energy to the battery 102 such that the battery 102 can be charged whilst in use. As the cabin crew moves the trolley away from the first field generator 122a, the battery will not be charging and will be running on stored power. In order to avoid power of the battery 102 running low, or depleting, during service, the trolley 100 can be moved over the second field generator 122b such that the receiver 104 receives energy, via induction, from the second field generator 122b. The receiver 104 then provides further energy to the battery 102 such that power resources can be replenished.

The trolley 100 described above allows the cabin crew to use the facilities that require power without contemplating whether the power in the battery is running low or nearing empty. In this way, the cabin crew can efficiently serve passengers without having to switch to another trolley that is fully charged or stop service altogether to re-charge the trolley 100. Further, the system 10 allows for a smaller battery pack within the trolley 100 as it can be charged whilst moving over the field generators provided at the aircraft surface.

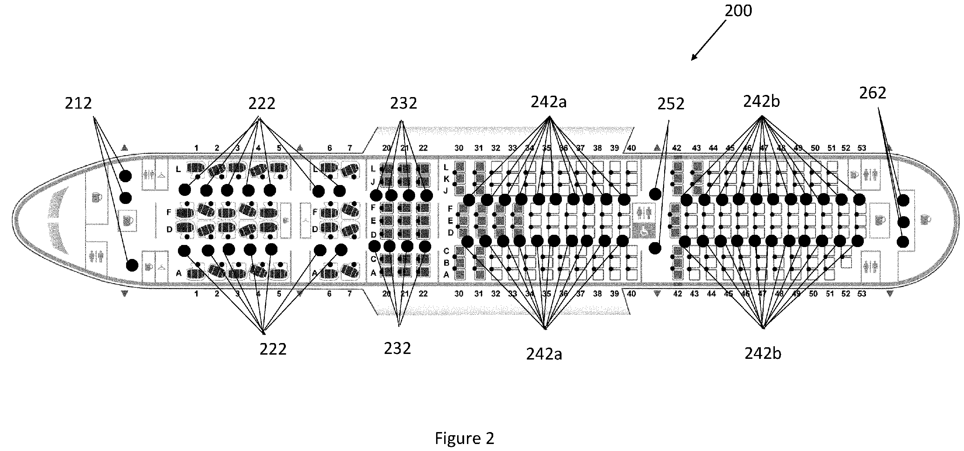

An aircraft cabin 200 is shown generally in Figure 2. The aircraft cabin 200 may include a number of field generators that correspond to the field generators 122a and 122b of Figure 1. For example, the aircraft cabin 200 might include a forward galley which may include a plurality of forward galley field generators 212. The aircraft cabin 200 may also include a business class cabin (or first-class cabin) that may include a plurality of business class field generators 222. Each field generator of the plurality of business class field generators 222 may be separated by a distance of between 100cm to 210cm such that the trolley of Figure 1 can contact the field generators during service as the trolley moves through the aircraft cabin 200. The aircraft cabin 200 may also include a premium economy class cabin that may include a plurality of premium economy class field generators 232. Each field generator of the plurality of premium economy class field generators 232 may be separated by a distance of between 70cm and 100cm. The aircraft cabin 200 may also include a forward economy class cabin that may include a plurality of forward economy class field generators 242a. The forward economy class field generators 242a may be separated by a distance of between 70cm and 90cm. As shown in Figure 2, the aircraft cabin 200 may also include one or more middle galleys (only one is shown in Figure 2) that may include a plurality of middle galley field generators 252. The middle galley may separate sections of the economy class cabin. The aircraft cabin 200 may also include an aft economy class cabin that may include a plurality of aft economy class field generators 242b. Each field generator of the plurality of aft economy class field generators 242b may be separated by a distance of between 70cm and 90cm. The aircraft cabin 200 may also include an aft galley that may also include a plurality of aft galley field generators 262. The configuration as shown in Figure 2 is for a specific type of aircraft. However, it is to be understood that the aircraft cabin 200 may include one or more of the classes of cabins described above. The arrangement of Figure 2 allows for the trolley of Figure 1 to be charged as it is moved around the cabin during service.

Although this disclosure has been described in terms of preferred examples, it should be understood that these examples are illustrative only and that the claims are not limited to those examples. Those skilled in the art will be able to make modifications and alternatives in view of the disclosure which are contemplated as falling within the scope of the appended claims.

## Claims

1. An aircraft trolley battery charging system comprising:
a trolley (100), wherein the trolley includes a battery (102) and a receiver (104);
an aircraft surface (120), wherein the trolley (100) is configured to move on the aircraft surface (120);
at least one field generator (122a, 122b) provided at the aircraft surface (120).

2. The aircraft trolley battery charging system of claim 1, wherein the at least one field generator (122a, 122b) is provided below the aircraft surface (120).

3. The aircraft trolley battery charging system of claim 1 or 2, wherein the aircraft surface (120) is a floor of an aircraft cabin.

4. The aircraft trolley battery charging system of any preceding claim, wherein the trolley (100) includes an external surface (106) and wherein the receiver (104) extends from the external surface (106) towards the aircraft surface (120).

5. The aircraft trolley battery charging system of claim 4, wherein the receiver (104) is configured to extend to be as close as possible to the aircraft surface (120) without contacting the aircraft surface (120).

6. An aircraft comprising:
an aircraft cabin (200);
an aircraft trolley battery charging system as claimed in any preceding claim.

7. The aircraft of claim 6, wherein the aircraft cabin (200) includes one of a business class cabin, a premium economy class cabin, at least one economy class cabin and at least one galley.

8. The aircraft of claim 7, wherein the at least one field generator (122a, 122b) includes at least one of a plurality of galley field generators (212, 252, 262), a plurality of business class field generators (222), a plurality of premium economy class field generators (232) and a plurality of economy class field generators (242a, 242b).

9. The aircraft of claim 8, wherein the plurality of business class field generators (222) are separated by a distance of between 100cm to 210cm, wherein the plurality of premium economy class field generators (232) are separated by a distance of between 70cm and 100cm, and wherein the plurality of economy class field generators are separated by a distance of between 70cm and 90cm.

10. A method of charging a battery in an aircraft trolley, the method comprising:
providing a battery (102) and a receiver (104) in a trolley (100);
providing at least one field generator (122a, 122b) at an aircraft surface (120), wherein the trolley (100) is configured to move on the aircraft surface (120);
moving the receiver (104) over the at least one field generator (122a, 122b) such that energy may be transferred, via induction, from the at least one field generator (122a, 122b) to the receiver (104).

11. The method of claim 10, wherein the at least one field generator (122a, 122b) is provided below the aircraft surface (120).

12. The method of claim 10 or 11, wherein the aircraft surface (120) is a floor of an aircraft cabin.

13. The method of any of claims 10, 11 or 12, wherein the trolley (100) includes an external surface (106) and wherein the receiver (104) extends from the external surface (106) towards the aircraft surface (120).

14. The method of claim 13, wherein the receiver (104) is configured to extend to be as close as possible to the aircraft surface (120) without contacting the aircraft surface (120).
